# EUROPÄISCHE PATENTSCHRIFT

(11) **EP 0 889 046 B1**
(45) Veröffentlichungstag und Bekanntmachung des Hinweises auf die Patenterteilung: **31.08.2005**
(21) Anmeldenummer: 98111712.0
(22) Anmeldetag: 25.06.1998
(51) Int. Cl.: C07D 498/22, C09B 19/02

(54) **Triphendioxazine und ihre Verwendung als Pigmente**
Triphendioxazines and their use as pigments
Triphénedioxazines et leur utilisation comme pigments

(30) Priorität: 25.06.1997 DE 19727079
(43) Veröffentlichungstag der Anmeldung: 07.01.1999
(73) Patentinhaber: Clariant Finance (BVI) Limited, Road Town, Tortola (VG)
(72) Erfinder: Kempter, Peter, 79539 Lörrach (DE); Kaul, Bansi Lal, 4105 Biel-Benken (CH)
(74) Vertreter: Hütter, Klaus

(56) Entgegenhaltungen:
- EP-A- 0 184 711
- DE-A- 3 239 321
- DE-A- 4 442 291
- US-A- 4 751 300

## Beschreibung

Gegenstand der Erfindung sind chlorfreie, symmetrisch oder asymmetrisch substituierte Triphendioxazin-Verbindungen, die untenstehender allgemeinen Formel (I) entsprechen, sowie deren Verwendung als Pigmente, insbesondere zum Färben von Kunststoffmassen. Die Erfindung betrifft auch ein Verfahren zur Herstellung dieser Triphendioxazin-Verbindungen.

US 4,751,300 offenbart die Herstellung ausgewählter Dioxazinverbindungen, die in Position 6 und 13 entweder Wasserstoff oder Chlor tragen. EP 0 184 711 A2 und DE 32 39 321 A1 offenbaren ausgewählte Dioxazinverbindungen, die in Position 6 und 13 entweder Wasserstoff oder Chlor tragen.

In der gleichzeitig anhängenden Patentanmeldung DE 44 42 291.1 werden die an den Positionen 6 und 13 der Formel (I) dichlorierten Triphendioxazin-Verbindungen offenbart.

Es wurde nun gefunden, dass man die chlorfreien Triphendioxazin-Verbindungen erhält, wenn man die Kondensationsreaktion in Gegenwart von organischen Carbonsäuren durchführt.

Gegenstand der Erfindung sind somit Triphendioxazin-Verbindungen der allgemeinen Formel (I) 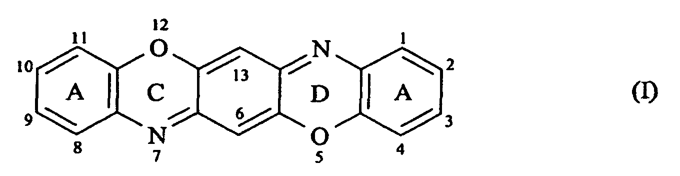 wobei die mit A bezeichneten Kerne unabhängig voneinander linear in 2,3- und 9,10-Stellung oder angular in 1,2- und 8,9- oder in 3,4- und 10,11-Stellung anelliert Ringe mit den Restgliedern der Formeln (i) -NR₁(CO)ₘ-NH-, (ii) -CR₁=CH-CO-NH-, (iii) -O-CH₂-CO-NH-, (iv) -CO-CH=CR₁-NH-, (v) -CO-NH-CO-NH-, (vi) -CO-NH-CR₂=N-, (vii) -CR₂=N-CO-NH-, (viii) -NR₁-(CO)ₘ-O-, (ix) -NH-CR₁=N-, (x) -NH-CO-CR₁=N-, (xi) -NH-CO-CHR₁-NH-, (xii) -NR₃-(CO)ₘ-NR₄-, (xiii) -NR₅-(CO)ₘ-NR₆-, (xiv) -NR₄-CO-O- oder (xv) -NR₆-CO-O- enthalten.
- m: 1 oder 2
- R₁: Wasserstoff, C₁₋₄Alkyl oder Phenyl, vorzugsweise Wasserstoff, Methyl oder Ethyl,
- R₂: Wasserstoff, C₁₋₄Alkyl oder Phenyl, vorzugsweise Wasserstoff, Methyl oder Ethyl,
- R₃, R₄, R₅ und R₆,: unabhängig voneinander Wasserstoff, einen C₁₋₈Alkylrest, einen substituierten oder substituierten oder unsubstituierten Phenyl-, Benzyl-, Naphthyl- oder Benzanilid-Rest, einen unsubstituierten C₅₋₆Cycloalkyl-Rest oder einen Rest der Formel 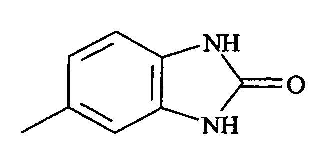
bedeuten und wobei die angulären Moleküle in 3- und 10-Stellung bzw. in 2- und 9-Stellung je eine C₁₋₂Alkoxygruppe tragen können.

Hierbei ist es überraschend, dass selbst tetrasubstituierte Verbindungen pigmentäre Eigenschaften besitzen.

Vorzugsweise bedeuten R₃, R₄, R₅ und R₆ unabhängig voneinander Wasserstoff, einen Methyl-Rest, einen Ethyl-Rest, einen (n, i) Propyl-Rest, einen (n, i, sek., tert.) Butyl-Rest, einen Cyclohexyl-Rest, einen substituierten oder unsubstituierten Benzanilid-Rest, einen Naphthyl-Rest, einen Rest der Formel 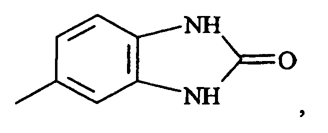 einen unsubstituierten Phenyl-Rest, einen Phenyl-Rest, der einfach oder mehrfach substituiert ist durch Reste, die ausgewählt sind aus der Gruppe, die Halogen, vorzugsweise Chlor, Nitrogruppen, Phenyl-Reste, C₁₋₈-Alkyl-Reste, vorzugsweise C₁₋₄-Alkyl-Reste und C₁₋₂-Alkoxy-Reste umfasst.

Der oben genannte substituierte Phenylrest in der Definition von R₃ bis R₆ ist vorzugsweise ausgewählt aus der Gruppe, die Reste umfasst, die den Formeln (a) bis (p) entsprechen.

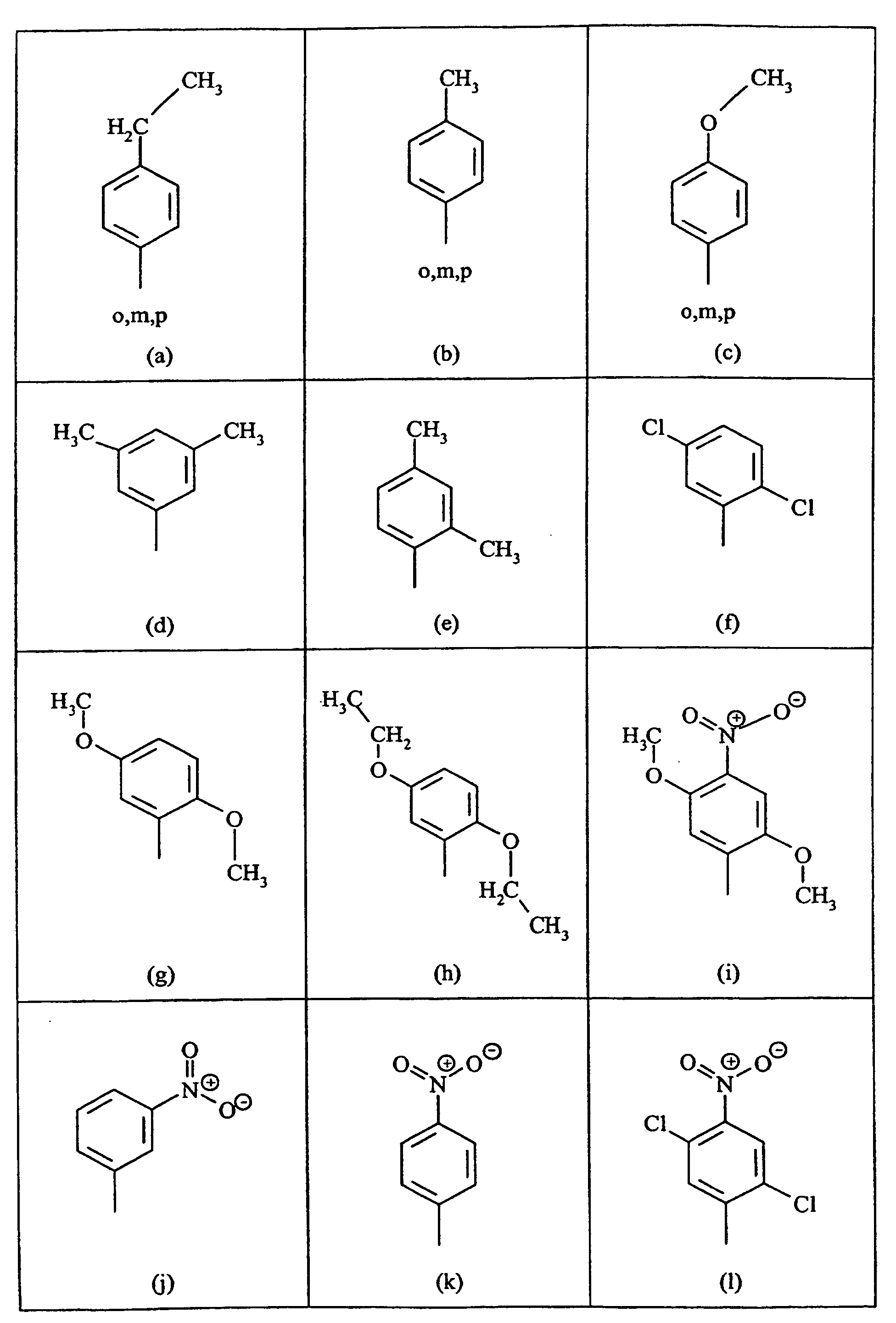

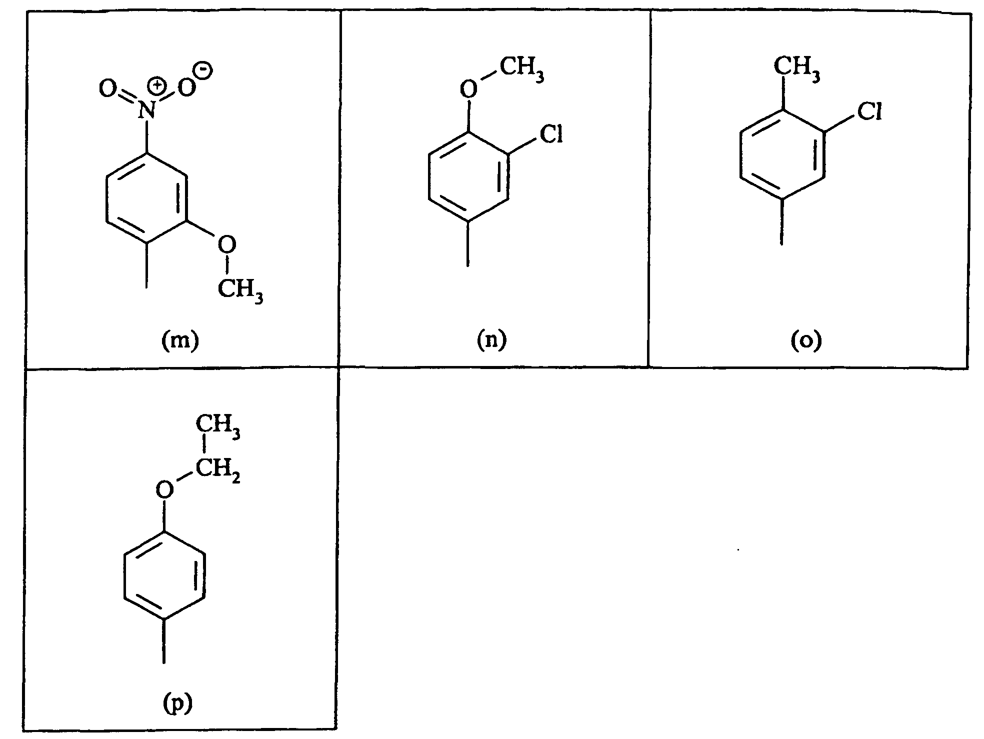

Der oben genannte substituierte Benzanilid-Rest in der Definition von R₃ bis R₆ ist vorzugsweise ausgewählt aus der Gruppe, die Reste umfasst, die den Formeln (r) und (s) entsprechen.

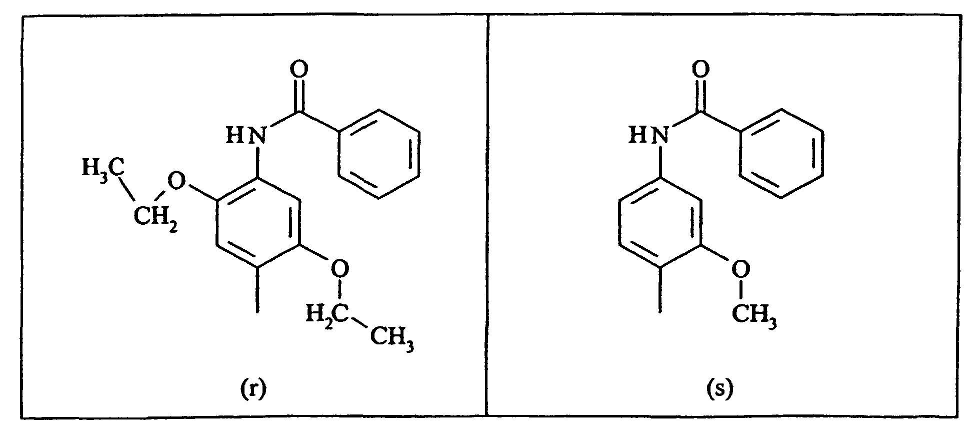

Unter den Triphendioxazin-Verbindungen, welche die Restglieder der Formeln (xii) bis (xv) enthalten, sind solche bevorzugt, für die R₄ und R₆ Wasserstoff und R₃ ein Methyl-Rest und R₅ ein Ethyl-Rest ist (unsymmetrisch disubstituierte Verbindung) bzw. R₃ und R₅ jeweils ein 4-Methylphenyl- oder 4-Methoxyphenyl-Rest ist (symmetrisch disubstituierte Verbindungen).

Von den symmetrisch tetrasubstituierten Verbindungen sind die tetramethyl-, tetraethyl-, tetrapropyl (n, i)- und tetrabutyl (n, i, sek., tert.)-substituierten Verbindungen bevorzugt.

Von den asymmetrisch tetrasubstituierten Verbindungen sind solche bevorzugt, für die die Bedeutungen von R₃ und R₄ ausgewählt sind aus der Gruppe, die die Reste Methyl, Ethyl, Propyl (n, i) und Butyl (n, i, sek., tert.) umfasst und R₅ und R₆ jede der oben genannten Bedeutungen haben kann.

In bevorzugten Pigmenten der Formel (I) mit Restgliedern der Formeln (i) bis (xi) entsprechen die Formelteile 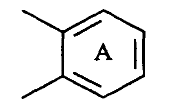 vorzugsweise den Formeln (α) bis (ρ)

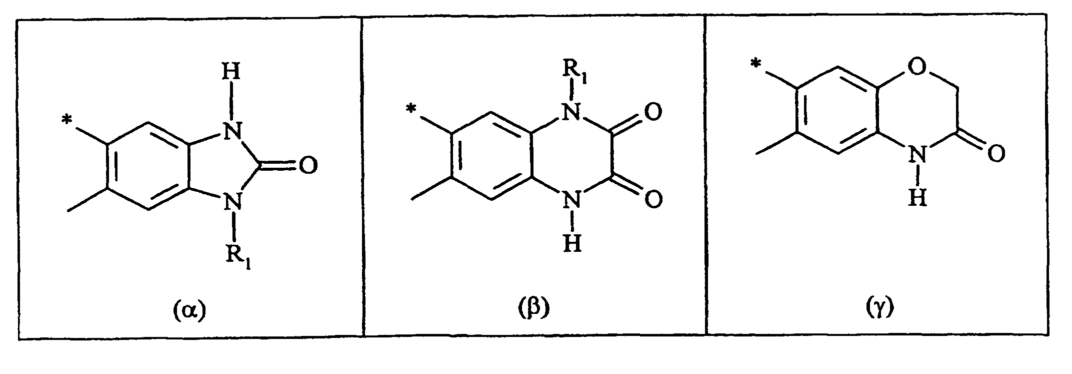

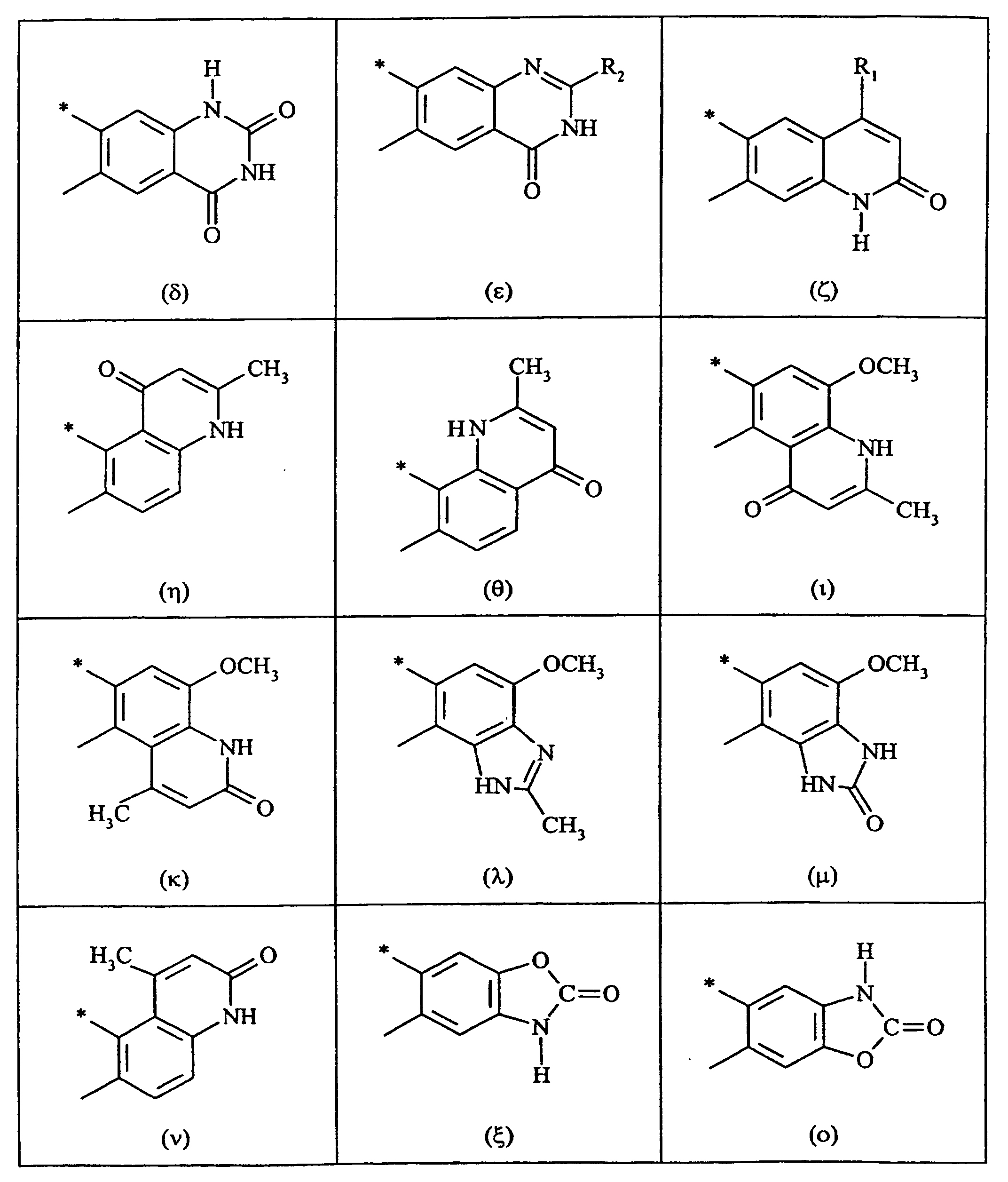

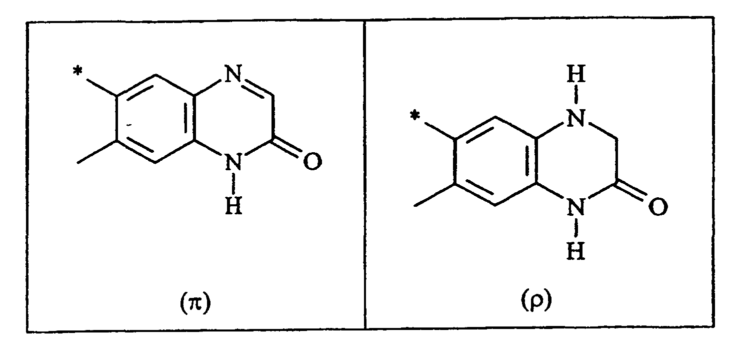

wobei die mit * bezeichnete Bindung zum Stickstoffatom führt und
- R₁: Wasserstoff, C₁₋₄Alkyl oder Phenyl, vorzugsweise Wasserstoff, Methyl oder Ethyl und
- R₂: Wasserstoff, C₁₋₄Alkyl oder Phenyl, vorzugsweise Wasserstoff, Methyl oder Ethyl, bedeuten.

Besonders bevorzugte Verbindungen der Formel (I) mit Restgliedern der Formeln (i) bis (xi) sind solche, in denen beide Ringe A den Formelteilen (α) oder (τ) entsprechen.

Die Herstellung der erfindungsgemässen Verbindungen ist dadurch gekennzeichnet, dass man 1 Mol 2,3,5,6-Tetrachlor-1,4-benzochinon mit 2 Mol einer Verbindung der allgemeinen Formel (IIa) und (IIb) 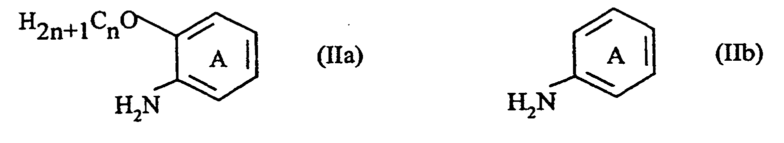 worin n 1, 2 oder 3 bedeutet,
in Gegenwart einer organischen Carbonsäure, insbesondere para-Toluol-Sulfonsäure, kondensiert. Falls die an den Ringen A annelierten Heterocyclen verschieden sind, müssen unterschiedliche Verbindungen der Formel (IIa) bzw. (IIb) eingesetzt und Massnahmen für eine asymmetrische Kondensation getroffen werden. Die Kondensationsreaktion wird in einem inerten Lösungsmittel, vorzugsweise ortho-Dichlorbenzol, durchgeführt.

Die Verbindungen der Formel (IIa) bzw. (IIb) sind bekannt (siehe z.B. DE-OS 28 55 883) oder lassen sich in Analogie zu bekannten, beschriebenen Verfahren, bzw. auf eine andere, dem Fachmann geläufige Methode ohne Schwierigkeiten herstellen.

Dem Fachmann ist bekannt, dass die Kondensationsreaktion im allgemeinen nicht vollständig zu den erfindungsgemässen chlorfreien Verbindungen der Formel (I) führt; es entsteht daneben praktisch immer eine gewisse Menge Monochlor- und Dichlorverbindung. Je mehr organische Carbonsäure als Kondensationsmittel im Reaktionsgemisch vorhanden ist, desto reiner ist das Endprodukt.

Da die Abtrennung der chlorfreien Triphendioxazin-Verbindungen äusserst schwierig ist und die vorteilhaften Eigenschaften auch im Gemisch mit den mono- und dichlorierten Verbindungen zur Geltung kommen, wird das anfallende Gemisch, vorzugsweise nach der üblichen Nachbehandlung, als Pigment, verwendet.

Durch die oben genannte Nachbehandlung der Rohpigmente in organischen Lösungsmitteln, in denen die Pigmente selbst nicht gelöst werden, und bei erhöhten Temperaturen, beispielsweise bei 60 bis 200°C, insbesondere bei 70 bis 150°C, vorzugsweise bei 75 bis 100°C, können die Pigmenteigenschaften oft weiter verbessert werden. Die Nachbehandlung wird vorzugsweise mit einer Mahl- oder Knetoperation kombiniert.

Die erfindungsgemässen Pigmente eignen sich ausgezeichnet zum Färben von Kunststoffmassen, worunter lösungsmittelfreie und lösungsmittelhaltige Massen aus Kunststoffen oder Kunstharzen verstanden werden (in Anstrichfarben auf öliger oder wässriger Grundlage, in Lacken verschiedener Art, zum Spinnfärben von Viscose oder Celluloseacetat, zum Pigmentieren von Kunststoffen, beispielsweise Polyamid, Polyethylen, Polystyrol, Polyvinylchlorid, Kautschuk und Kunstleder). Sie können auch in Druckfarben für das graphische Gewerbe, für die Papiermassenfärbung, für die Beschichtung von Textilien oder für den Pigmentdruck Verwendung finden.

Die erhaltenen Färbungen zeichnen sich durch ihre hervorragende Hitze-, Licht- und Wetterechtheit, Chemikalienbeständigkeit, ihre Farbstärke und die sehr guten applikatorischen Eigenschaften, z.B. Kristallisierechtheit und Dispergierechtheit und insbesondere durch ihre Migrier-, Ausblüh-, Überlackier- und Lösungsmittelechtheit aus.

Desweiteren sind die erfindungsgemässen Pigmente auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettonern, Flüssigtonern, Polymerisationstonern sowie weiteren Spezialtonern (Lit.: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-. Phenol-Epoxidharze, Polysulfone, Polyurethane, einzelne oder in Kombination, sowie Polyethylen und Polypropylen, die noch weitere Inhaltsstoffe, wie Ladungssteuermittel, Wachse oder Fliesshilfsmittel, enthalten können oder im Nachhinein zugesetzt bekommen können.

Ein weiteres Anwendungsgebiet erfindungsgemässer Pigmente ist ihre Verwendung als Farbmittel in Pulver und Pulverlacken, insbesondere triboelektrisch oder elektrokinetisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating", Research Studies Press, John Wiley & Sons, 1984).

Als Pulverlackharze werden typischerweise Epoxidharze, carboxyl- und hydroxygruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Ausserdem sind die erfindungsgemässen Pigmente geeignet, als Farbmittel in Ink-Jet Tinten auf wässriger und nichtwässriger Basis, sowie in solchen Tinten, die nach dem Hot-melt Verfahren arbeiten.

In den folgenden Beispielen bedeuten die Teile Gewichtsteile und die Prozente Gewichtsprozente. Die Temperaturen sind in Celsiusgraden angegeben. Ein Volumenteil entspricht dem Volumen eines Gewichtsteils Wasser.

### BEISPIEL 1

In 300 Volumenteile o-Dichlorbenzol werden 24 Teile 4-Methyl-5,8-dimethoxy-6-amino-chinolon-(2), 12 Teile Chloranil (2,3,5,6-Tetrachlorbenzochinon) und 8.5 Teile wasserfreies Natriumacetat eingetragen. Unter Rühren wird während 6 Stunden auf 70°C erhitzt, dann destilliert man zwischen 80 und 130° ein Gemisch von Essigsäure und o-Dichlorbenzol ab. Nach beendeter Destillation werden 12 Teile p-Toluolsulfonsäure eingetragen und die Temperatur während 8 Stunden auf 175-180° erhöht, wobei das abdestillierte o-Dichlorbenzol ersetzt wird. Man lässt auf 100° abkühlen, filtriert, wäscht den Rückstand erst mit heissem o-Dichlorbenzol, sodann mit Ethanol, danach mit heissem Wasser, schliesslich mit kaltem Wasser und trocknet ihn. Man erhält so das Pigment der Formel 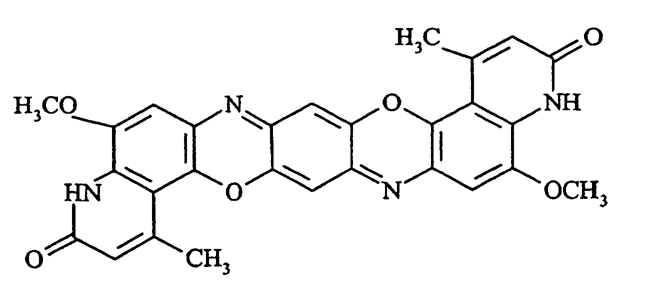 das Kunststoffe in rötlich blauen Tönen mit ausgezeichneten Migrier- und Lösungsmittelechtheit färbt.

### NACHBEHANDLUNG

10 Teile des nach Beispiel 1 hergestellten Pigments werden in Gegenwart von 30 Teilen NaCl und 150 Teilen Aceton in einer Kugelmühle von 0.5 Liter Fassungsvermögen mit 1 kg Stahlkugeln von 4 mm Durchmesser während 72 Stunden gemahlen. Das erhaltene Mahlgut wird mit einem Sieb von den Kugeln abgetrennt, filtriert und mit 2000 Teilen Wasser salzfrei gewaschen. Das Pigment wird bei 80° im Vakuum getrocknet.

In Analogie zu den Angaben in Beispiel 1 werden die Pigmente der Formel (I), worin die Ringe A den nachstehenden Formeln (a) bis (o) entsprechen, hergestellt.

**TABELLE 1**

| **Beispiel** | **Ring A** |
|---|---|
| 2 | a |
| 3 | b |
| 4 | c |
| 5 | d |
| 6 | e |
| 7 | f |
| 8 | g |
| 9 | h |
| 10 | i |
| 11 | j |
| 12 | k |
| 13 | l |
| 14 | m |
| 15 | n |
| 16 | o |

Die Gruppen (a) bis (o) sind wie folgt:

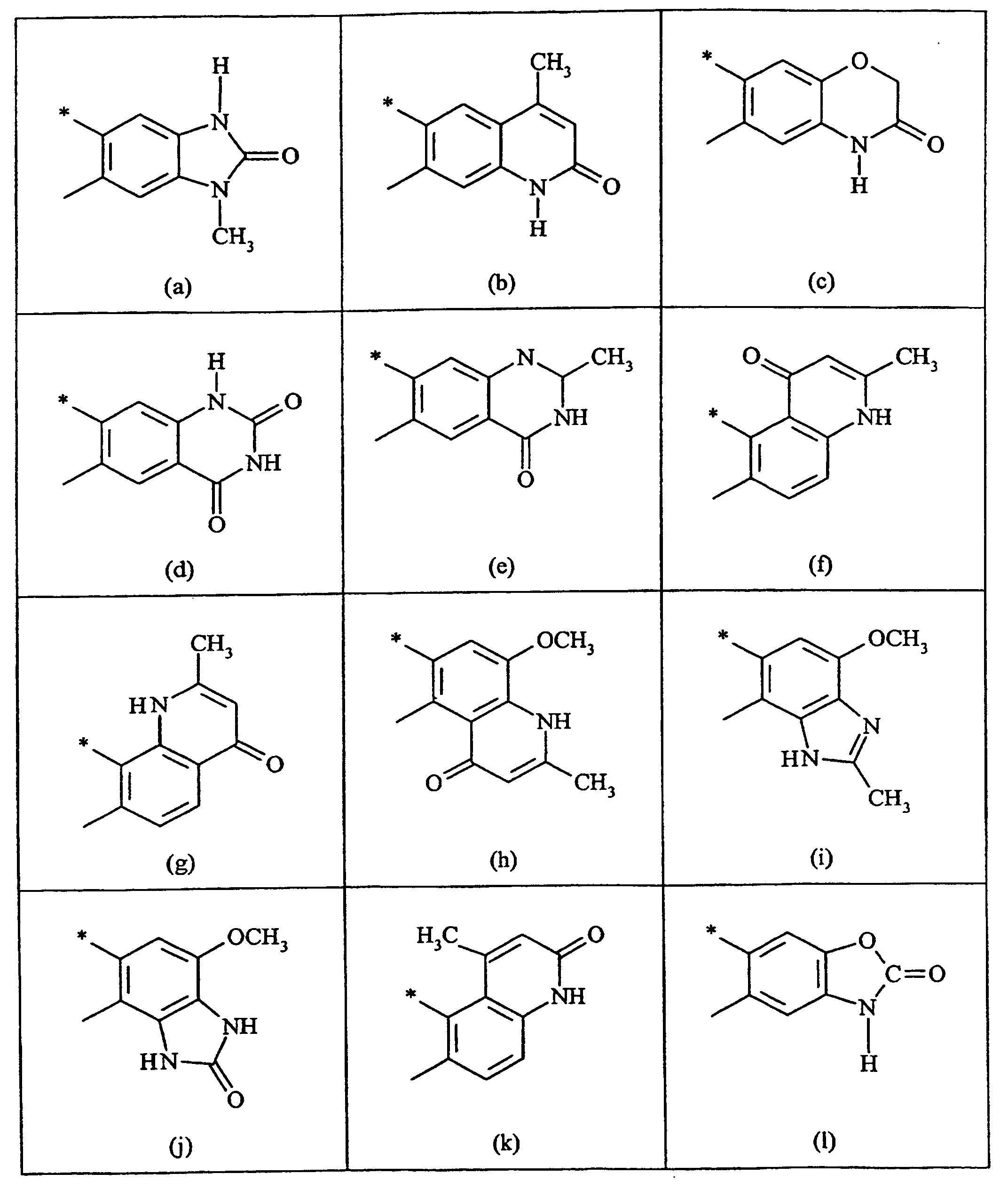

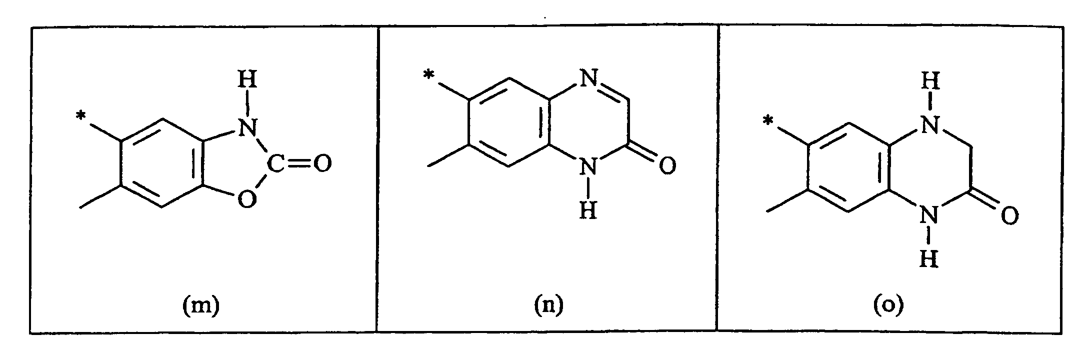

### BEISPIEL 17

### Diimidazolono(4,5-b:4',5'-m)triphendioxazin-3,11-di-p-tolyl-2,10-dion

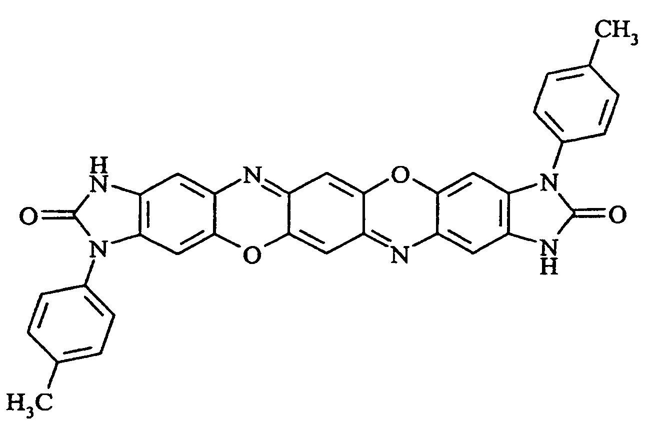

In 300 Volumenteile o-Dichlorbenzol werden 23.9 Teile 1-Phenyl-1,3-dihydro-5-amino-benzimidazol-2-on, 12 Teile Chloranil (2,3,5,6-Tetrachlorbenzochinon) und 8.5 Teile wasserfreies Natriumacetat eingetragen. Unter Rühren wird während 6 Stunden auf 70°C erhitzt, dann destilliert man zwischen 80°C und 130°C ein Gemisch von Essigsäure und o-Dichlorbenzol ab. Nach beendeter Destillation werden 12 Teile p-Toluolsulfonsäure eingetragen und die Temperatur während 8 Stunden auf 175-180°C erhöht, wobei das abdestillierte o-Dichlorbenzol ersetzt wird. Man lässt auf 100°C abkühlen, filtriert, wäscht den Rückstand erst mit heissem o-Dichlorbenzol, sodann mit Ethanol, danach mit heissem Wasser, schliesslich mit kaltem Wasser und trocknet ihn. Es werden 25 Teile eines Pigments der oben stehenden Formel erhalten, das Kunststoffe in rotvioletten Tönen mit ausgezeichneter Migrierechtheit färbt.

### BEISPIEL 18

### Diimidazolono(4,5-b:4',5'-m)triphendioxazin-3,11-di-p-methoxyphenyl-2,10-dion

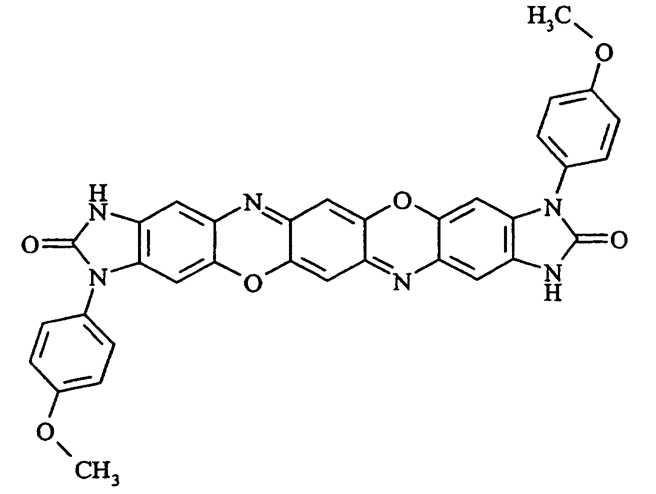

In 300 Volumenteile o-Dichlorbenzol werden 25.5 Teile 1-(4-Methoxyphenyl)-1,3-dihydro-5-amino-benzimidazol-2-on, 12 Teile Chloranil (2,3,5,6-Tetrachlorbenzochinon) und 8.5 Teile wasserfreies Natriumacetat eingetragen. Unter Rühren wird während 6 Stunden auf 70°C erhitzt, dann destilliert man zwischen 80°C und 130°C ein Gemisch von Essigsäure und o-Dichlorbenzol ab. Nach beendeter Destillation werden 12 Teile p-Toluolsulfonsäure eingetragen und die Temperatur während 8 Stunden auf 175-180°C erhöht, wobei das abdestillierte o-Dichlorbenzol ersetzt wird. Man lässt auf 100°C abkühlen, filtriert, wäscht den Rückstand erst mit heissem o-Dichlorbenzol, sodann mit Ethanol, danach mit heissem Wasser, schliesslich mit kaltem Wasser und trocknet ihn. Es werden 26 Teile eines Pigments der oben stehenden Formel erhalten, das Kunststoffe in rotvioletten Tönen mit ausgezeichneter Migrierechtheit färbt.

### BEISPIEL 19

### Diimidazolono(4,5-b:4',5'-m)triphendioxazin-2,10-dion

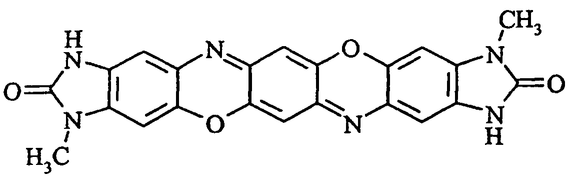

In 300 Volumenteile o-Dichlorbenzol werden 16.3 Teile 5-Aminobenzimidazolon-(2), 12 Teile Chloranil (2,3,5,6-Tetrachlorbenzochinon) und 8.5 Teile wasserfreies Natriumacetat eingetragen. Unter Rühren wird während 6 Stunden auf 70°C erhitzt, dann destilliert man zwischen 80°C und 130°C ein Gemisch von Essigsäure und o-Dichlorbenzol ab. Nach beendeter Destillation werden 12 Teile p-Toluolsulfonsäure eingetragen und die Temperatur während 8 Stunden auf 175-180°C erhöht, wobei das abdestillierte o-Dichlorbenzol ersetzt wird. Man lässt auf 100°C abkühlen, filtriert, wäscht den Rückstand erst mit heissem o-Dichlorbenzol, sodann mit Ethanol, danach mit heissem Wasser, schliesslich mit kaltem Wasser und trocknet ihn. Das erhaltene Pigment der oben stehenden Formel färbt Kunststoffe in rotvioletten Tönen mit ausgezeichneter Migrier- und Lösungsmittelechtheit.

### ANWENDUNGSBEISPIEL 1

- 4: Teile des Pigments gemäss Beispiel 1 werden mit
- 96: Teilen einer Mischung aus
- 50: Teilen einer 60%-igen Lösung von Kokos-Aldehyd-Melaminharzlösung in Butanol,
- 10: Teile Xylol und
- 10: Teile Ethylenglykolmonoethylether
- 24: Stunden in einer Kugelmühle gemahlen. Die dabei erhaltene Dispersion wird auf Aluminiumblech gespritzt, 30 Minuten an der Luft trocknen gelassen und dann 30 Minuten bei 120° eingebrannt.

Man erhält so einen brillant rotstichig violetten Film mit sehr guter Migrierechtheit sowie guter Licht- und Wetterbeständigkeit.

### ANWENDUNGSBEISPIEL 2

Beispiel für die Herstellung einer 0.1% gefärbten PVC-Folie (Verschnitt Buntpigment zu Weisspigment 1:5):
- 16.5: Teile eines Weichmachergemisches, bestehend aus gleichen Teilen Dioctylphthalat und Dibutylphthalat, werden mit
- 0.05: Teilen Pigmentfarbstoff gemäss Beispiel 1 und
- 0.25: Teilen Titandioxid gemischt. Dann werden
- 33.5: Teile Polyvinylchlorid zugegeben. Das Gemisch wird 10 Minuten auf einem Zweiwalzenstuhl mit Friktion gewalzt, wobei das sich bildende Fell mit einem Spatel fortlaufend zerschnitten und zusammengerollt wird. Dabei wird die eine Walze auf einer Temperatur von 40°, die andere auf einer Temperatur vom 140° gehalten. Anschliessend wird das Gemisch als Fell abgezogen und 5 Minuten bei 160° zwischen zwei polierten Metallplatten gepresst.

So erhält man eine rotstichig violett gefärbte PVC-Folie von hoher Brillanz und sehr guter Migrations- und Lichtechtheit.

## Patentansprüche

1. Triphendioxazin-Verbindungen der allgemeinen Formel (I) 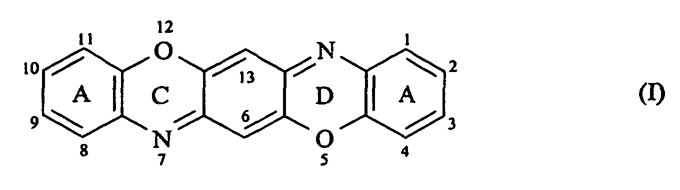 wobei
die mit A bezeichneten Kerne unabhängig voneinander linear in 2,3- und 9,10-Stellung oder angular in 1,2- und 8,9- oder in 3,4- und 10,11-Stellung anelliert Ringe mit den Restgliedern der Formeln (i) -NR₁(CO)ₘ-NH-, (ii) -CR₁=CH-CO-NH-, (iii) -O-CH₂-CO-NH-, (iv) -CO-CH=CR₁-NH-, (v) -CO-NH-CO-NH-, (vi) -CO-NH-CR₂=N-, (vii) -CR₂=N-CO-NH-, (viii) -NR₁-(CO)ₘ-O-, (ix) -NH-CR₁=N-, (x) -NH-CO-CR₁=N-, (xi) -NH-CO-CHR₁-NH-, (xii) -NR₃-(CO)ₘ-NR₄-, (xiii) -NR₅-(CO)ₘ-NR₆-, (xiv) -NR₄-CO-O oder (xv) -NR₆-CO-O- enthalten.
m 1 oder 2,
R₁ Wasserstoff, C₁₋₄Alkyl oder Phenyl,
R₂ Wasserstoff, C₁₋₄Alkyl oder Phenyl,
R₃, R₄, R₅ und R₆ unabhängig voneinander Wasserstoff, einen C₁₋₈Alkylrest, einen substituierten oder unsubstituierten Phenyl-, Benzyl-, Naphthyl- oder Benzanilid-Rest, einen substituierten oder unsubstituierten C₅₋₆Cycloalkyl-Rest oder einen Rest der Formel 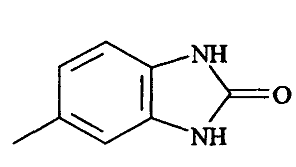
bedeuten und wobei die angulären Moleküle in 3- und 10-Stellung bzw. in 2- und 9-Stellung je eine C₁₋₂Alkoxygruppe tragen können.

2. Triphendioxazin-Verbindungen nach Anspruch 1, wobei R₃, R₄, R₅ und R₆ unabhängig voneinander bedeuten: Wasserstoff, einen Methyl-Rest, einen Ethyl-Rest, einen (n, i) Propyl-Rest, einen (n, i, sek., tert.) Butyl-Rest, einen Cyclohexyl-Rest, einen substituierten oder unsubstituierten Benzanilid-Rest, einen Naphthyl-Rest, einen Rest der Formel 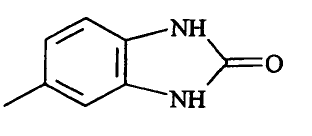 einen unsubstituierten Phenyl-Rest, einen Phenyl-Rest, der einfach oder mehrfach substituiert ist durch Reste, die ausgewählt sind aus der Gruppe, die Halogen, vorzugsweise Chlor, Nitrogruppen, Phenyl-Reste, C₁₋₈Alkyl-Reste, vorzugsweise C₁₋₄Alkyl-Reste und C₁₋₂Alkoxy-Reste umfasst.

3. Triphendioxazin-Verbindungen nach Anspruch 2, worin der substituierte Phenyl-Rest ausgewählt ist aus der Gruppe, die Reste umfasst, die den Formeln (a) bis (p) entsprechen

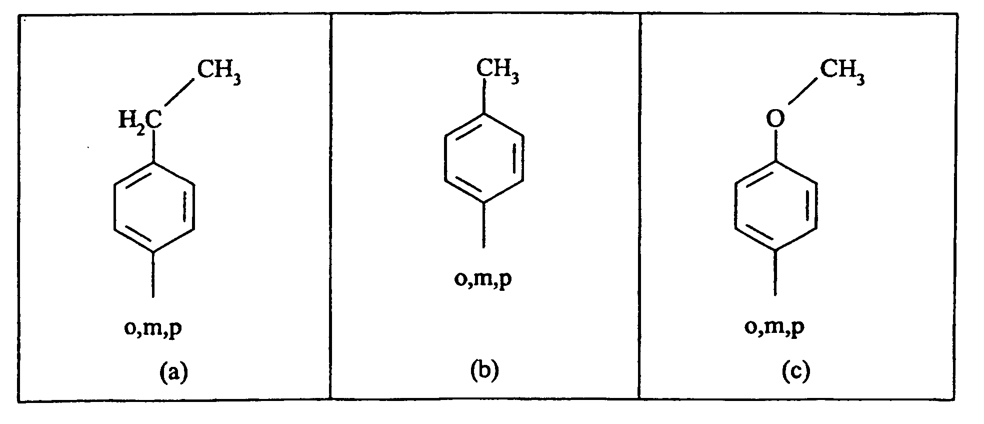

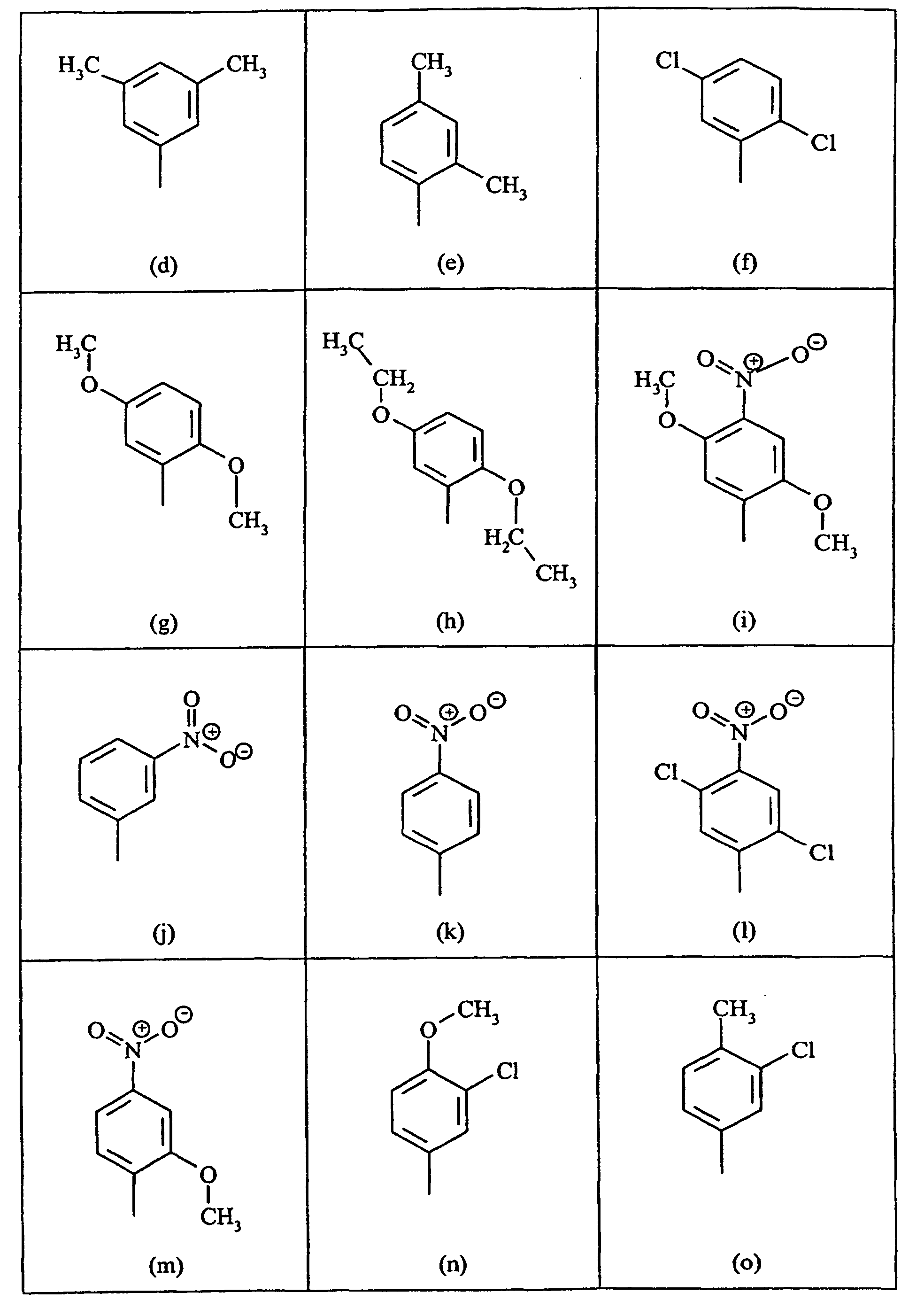

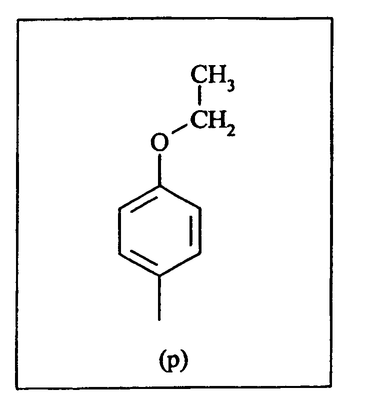

4. Triphendioxazin-Verbindungen nach Anspruch 2, worin der substituierte Benzanilid-Rest ausgewählt ist aus der Gruppe, die Reste umfasst, die den Formeln (r) und (s) entsprechen

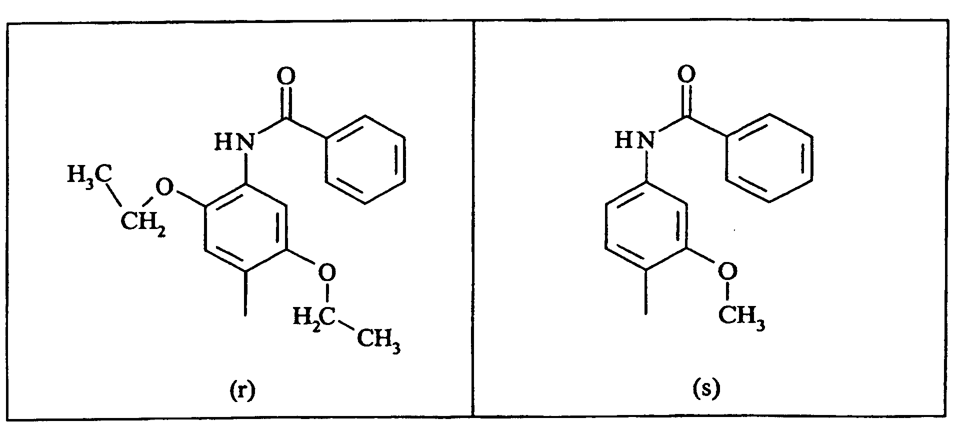

5. Triphendioxazin-Verbindung nach Anspruch 1 der Formel III 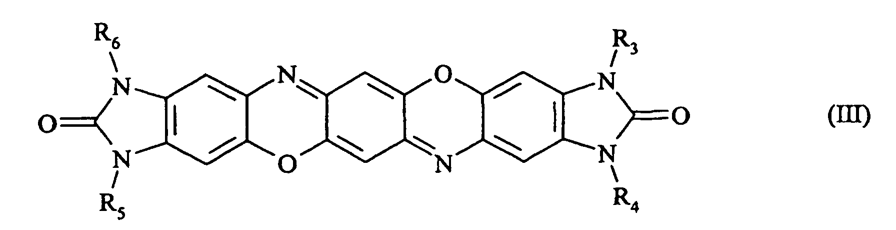 wobei R₄ und R₆ Wasserstoff, R₃ einen Methyl-Rest und R₅ einen Ethyl-Rest bedeuten.

6. Triphendioxazin-Verbindung gemäss Formel III nach Anspruch 5, wobei R₄ und R₆ Wasserstoff, R₃ und R₅ jeweils einen Rest der Formel 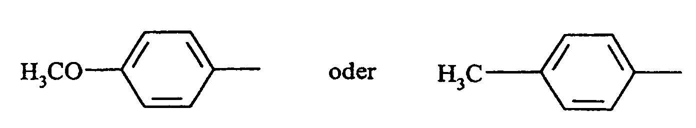 bedeuten.

7. Triphendioxazin-Verbindungen nach Anspruch 1, worin für die Restglieder der Formeln (i) bis (xi) die Formelteile 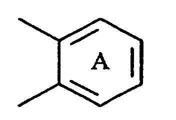 den Formeln (α) bis (ρ) entsprechen 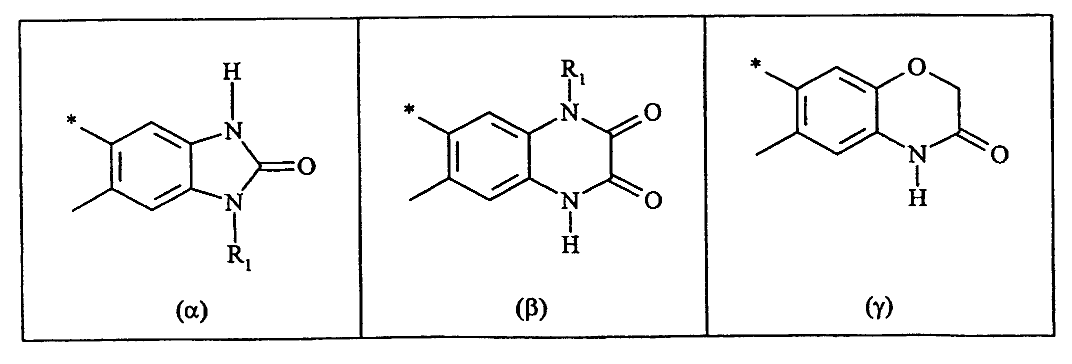 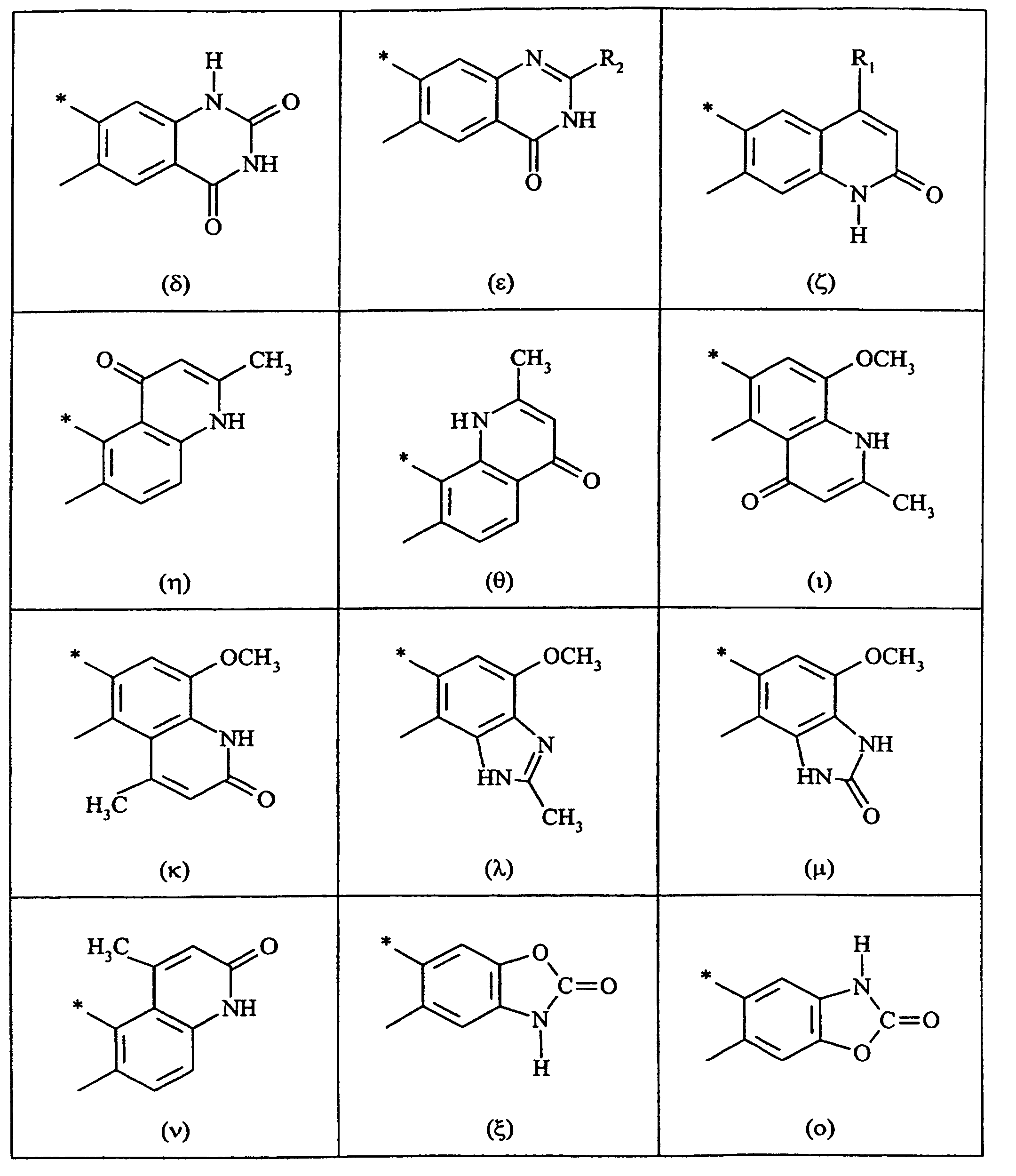 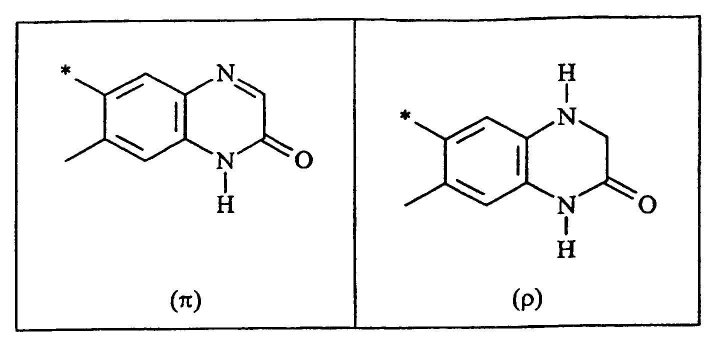 wobei die mit * bezeichnete Bindung zum Stickstoffatom führt und
R₁ Wasserstoff, C₁₋₄Alkyl oder Phenyl, und
R₂ Wasserstoff, C₁₋₄Alkyl oder Phenyl,
bedeuten.

8. Verfahren zur Herstellung der Triphendioxazin-Verbindungen der Formel (I) nach Anspruch 1, **dadurch gekennzeichnet, dass** man 1 Mol 2,3,5,6-Tetrachlor-1,4-benzochinon mit 2 Mol einer Verbindung der allgemeinen Formel (IIa) oder (IIb) 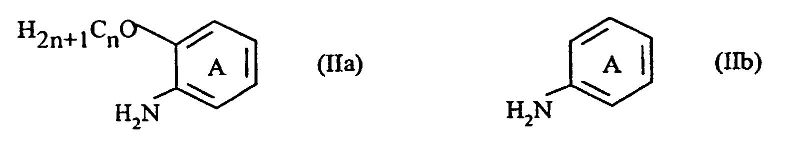 worin n 1, 2 oder 3 bedeutet,
in Gegenwart einer organischen Carbonsäure, insbesondere para-Toluol-Sulfonsäure kondensiert.

9. Verwendung der Verbindungen der Formeln (I) nach Anspruch 1 als Pigmente.

10. Verwendung nach Anspruch 9 zum Färben von Kunststoff- oder Papiermassen, als Farbmittel in elektrophotographischen Tonern und Entwicklern, in Ink-Jet-Tinten, in der Lackindustrie, für den Textildruck oder als Druckfarbe im graphischen Gewerbe.

## Claims

1. Triphendioxazine compounds of the formula (I) 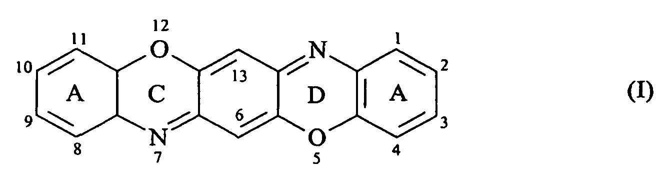 where
the rings labelled A comprise, independently of one another, rings which are fused linearly in positions 2,3 and 9,10 or angularly in positions 1,2 and 8,9 or 3,4 and 10,11 and have the radical members of the formula (i) -NR₁(CO)ₘ-NH-, (ii) - CR₁=CH-CO-NH-, (iii) -O-CH₂-CO-NH-, (iv) -CO-CH=CR₁-NH-, (v) -CO-NH-CO-NH-, (vi) -CO-NH-CR₂=N-, (vii) -CR₂=N-CO-NH-, (viii) -NR₁-(CO)ₘ-O-, (ix) -NH-CR₁=N-, (x) -NH-CO-CR₁=N-, (xi) -NH-CO-CHR₁-NH-, (xii) -NR₃-(CO)ₘ-NR₄-, (xiii) -NR₅-(CO)ₘ-NR₆-, (xiv) -NR₄-CO-O- or (xv) -NR₆-CO-O-,
m is 1 or 2,
R₁ is hydrogen, C₁₋₄alkyl or phenyl,
R₂ is hydrogen, C₁₋₄alkyl or phenyl,
R₃, R₄, R₅ and R₆ independently of one another are hydrogen, a C₁₋₈alkyl radical, a substituted or unsubstituted phenyl, benzyl, naphthyl or benzanilide radical, a substituted or unsubstituted C₅₋₆cycloalkyl radical or a radical of the formula 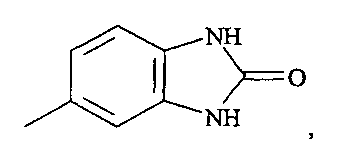
and the angular molecules in positions 3 and 10 and/or positions 2 and 9 can each carry a C₁₋₂alkoxy group.

2. Triphendioxazine compounds according to Claim 1, where R₃, R₄, R₅ and R₆ independently of one another are hydrogen, a methyl radical, an ethyl radical, a propyl (n, i) radical, a butyl (n, i, sec, tert) radical, a cyclohexyl radical, a substituted or unsubstituted benzanilide radical, a naphthyl radical, a radical of the formula 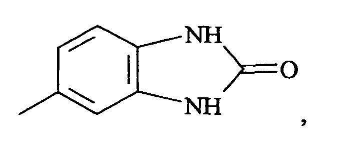 an unsubstituted phenyl radical, or a phenyl radical which is substituted one or more times by radicals selected from the group consisting of halogen, preferably chlorine, nitro groups, phenyl radicals, C₁₋₈alkyl radicals, preferably C₁₋₄alkyl radicals, and C₁₋₂alkoxy radicals.

3. Triphendioxazine compounds according to Claim 2, in which the substituted phenyl radical is selected from the group consisting of radicals of the formulae (a) to (p)

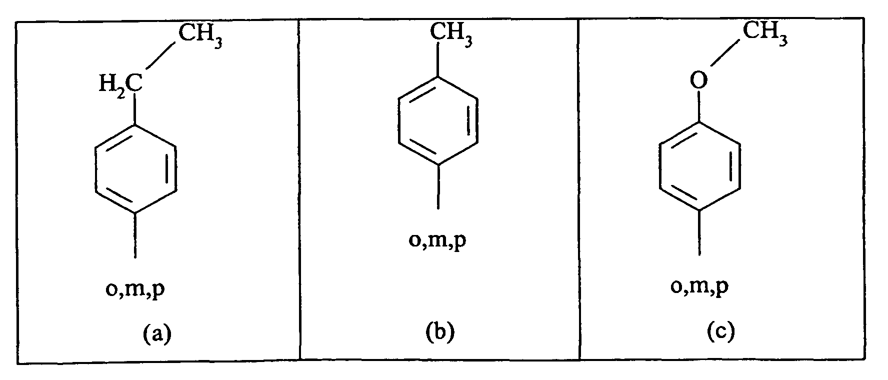

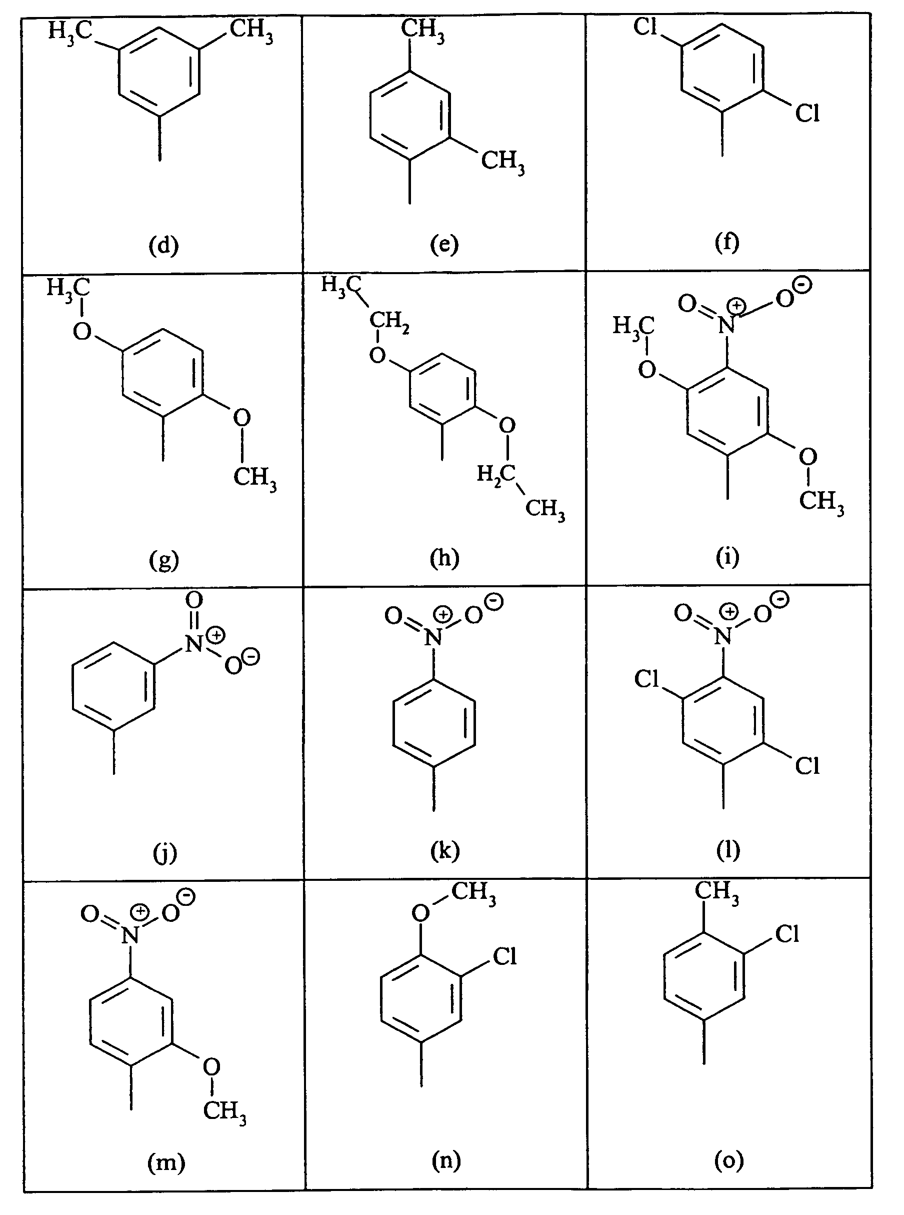

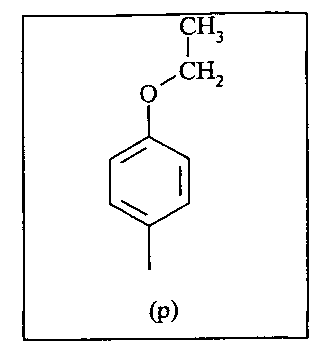

4. Triphendioxazine compounds according to Claim 2, in which the substituted benzanilide radical is selected from the group consisting of radicals of the formulae (r) and (s)

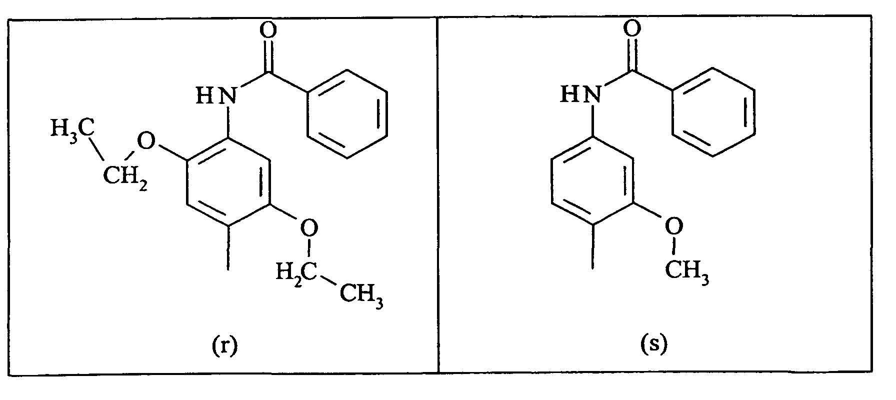

5. Triphendioxazine compound according to Claim 1 of the formula III 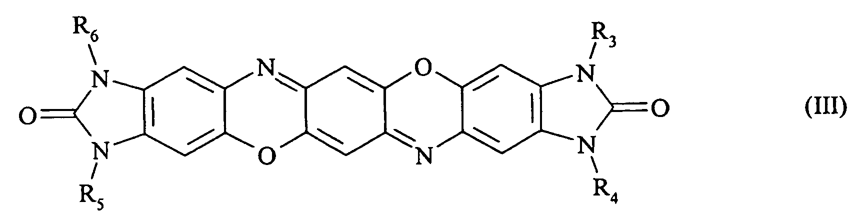 where R₄ and R₆ are hydrogen, R₃ is a methyl radical and R₅ is an ethyl radical.

6. Triphendioxazine compound of formula III according to Claim 5 where R₄ and R₆ are hydrogen and R₃ and R₅ are each a radical of the formula

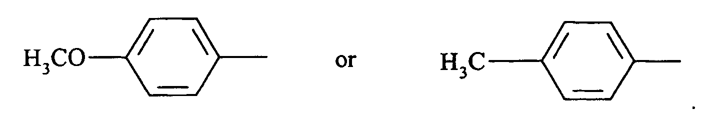

7. Triphendioxazine compounds according to Claim 1, in which for the radical members of the formulae (i) to (xi) the formula components 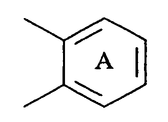 are of the formulae (α) to (ρ) 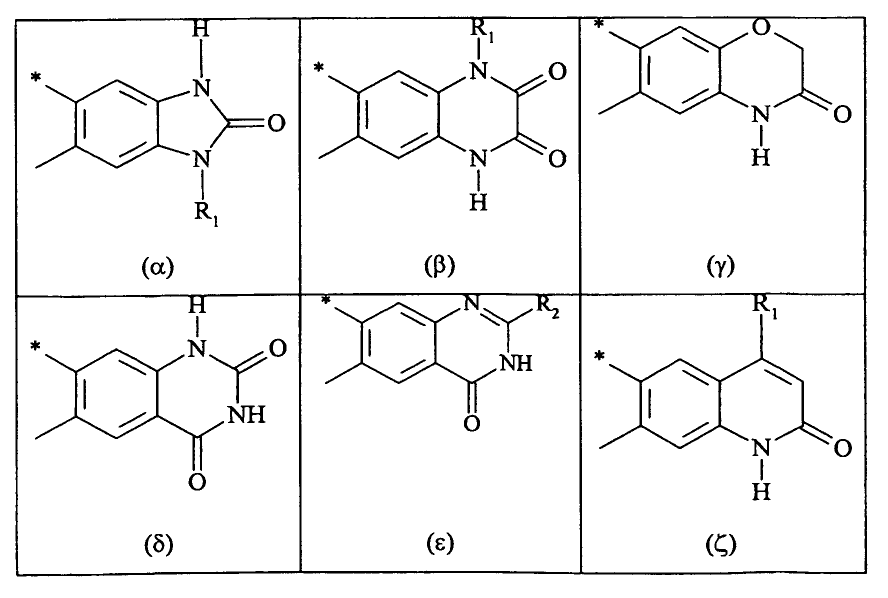 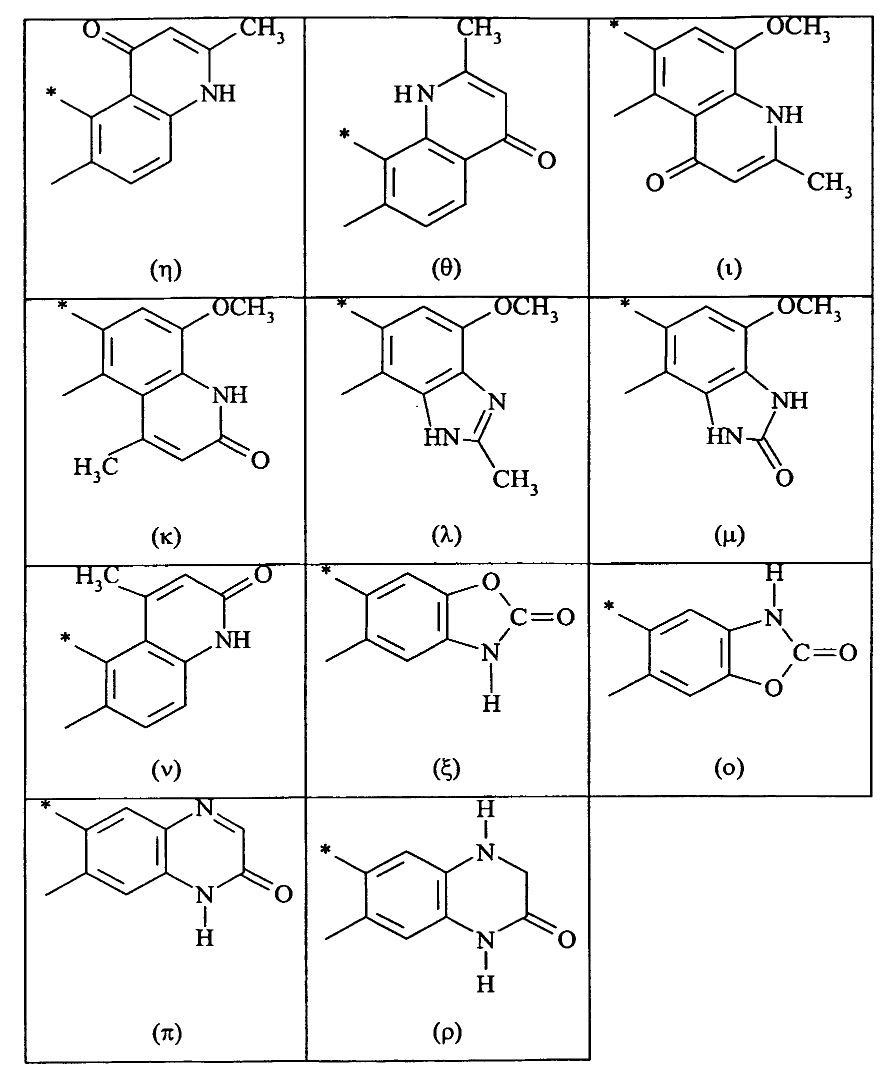 where the bond labelled * leads to the nitrogen atom and
R₁ is hydrogen, C₁₋₄alkyl or phenyl and
R₂ is hydrogen, C₁₋₄alkyl or phenyl.

8. Process for preparing the triphendioxazine compounds of the formula (I) according to Claim 1, **characterized in that** 1 mol of 2,3,5,6-tetrachloro-1,4-benzoquinone is condensed with 2 mol of a compound of the formula (IIa) or (IIb) 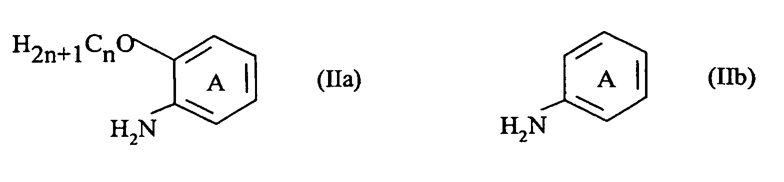 in which n is 1, 2 or 3
in the presence of an organic carboxylic acid, especially para-toluenesulphonic acid.

9. Use of the compounds of the formula (I) according to Claim 1 as pigments.

10. Use according to Claim 9 for colouring polymer compositions or paper slips, as colorants in electrophotographic toners and developers, in inkjet inks, in the coatings industry, for textile printing or as a printing ink in the graphical industry.

## Revendications

1. Composés de triphéndioxazine de formule générale (I) 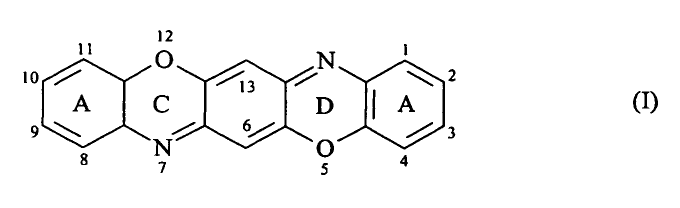 où les noyaux désignés par A contiennent, indépendamment l'un de l'autre, annelés linéairement en position 2,3 et 9,10 ou annelés angulairement en position 1,2 et 8,9 ou en position 3,4 et 10,11 des cycles avec les éléments résiduels des formules (i) -NR₁(CO)ₘ-NH-, (ii) -CR₁=CH-CO-NH-, (iii) -O-CH₂-CO-NH-, (iv) -CO-CH=CR₁-NH-, (v) -CO-NH-CO-NH-, (vi) -CO-NH-CR₂=N-, (vii) -CR₂=N-CO-NH-, (viii) -NR₁-(CO)ₘ-O-, (ix) -NH-CR₁=N-, (x) -NH-CO-CR₁=N-, (xi) - NH-CO-CHR₁-NH-, (xii) -NR₃-(CO)ₘ-NR₄-, (xiii) -NR₅-(CO)ₘ-NR₆-, (xiv) -NR₄-CO-O- ou (xv) -NR₆-CO-O-.
m représente 1 ou 2
R₁ représente hydrogène, alkyle en C₁ à C₄ ou phényle,
R₂ représente hydrogène, alkyle en C₁ à C₄ ou phényle,
R₃, R₄, R₅ et R₆ représentent, indépendamment l'un de l'autre, hydrogène, un radical alkyle en C₁ à C₈, un radical phényle, benzyle, naphtyle ou benzanilide substitué ou non substitué, un radical cycloalkyle en C₅ à C₆ substitué ou non substitué ou un radical de formule 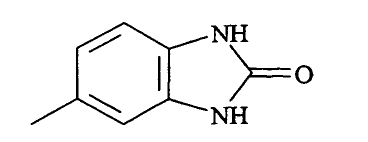
et où les molécules angulaires en position 3 et 10 ou en position 2 et 9 peuvent porter chacune un groupe alcoxy en C₁ à C₂.

2. Composés de triphéndioxazine selon la revendication 1, dans lesquels R₃, R₄, R₅ et R₆ signifient, indépendamment l'un de l'autre, hydrogène, un radical méthyle, un radical éthyle, un radical (n, i)-propyle, un radical (n, i, sec, tert)-butyle, un radical cyclohexyle, un radical benzanilide substitué ou non substitué, un radical naphtyle, un radical de formule 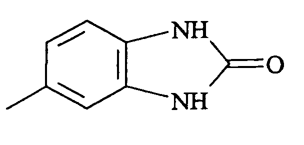 un radical phényle non substitué, un radical phényle qui est monosubstitué ou polysubstitué par des radicaux choisis dans le groupe comprenant halogène, de préférence chlore, les groupes nitro, les radicaux alkyle en C₁ à C₈, de préférence des radicaux alkyle en C₁ à C₄, et les radicaux alcoxy en C₁ à C₂.

3. Composés de triphéndioxazine selon la revendication 2, dans lesquels le radical phényle substitué est choisi dans le groupe qui comprend les radicaux qui correspondent aux formules (a) à (p)

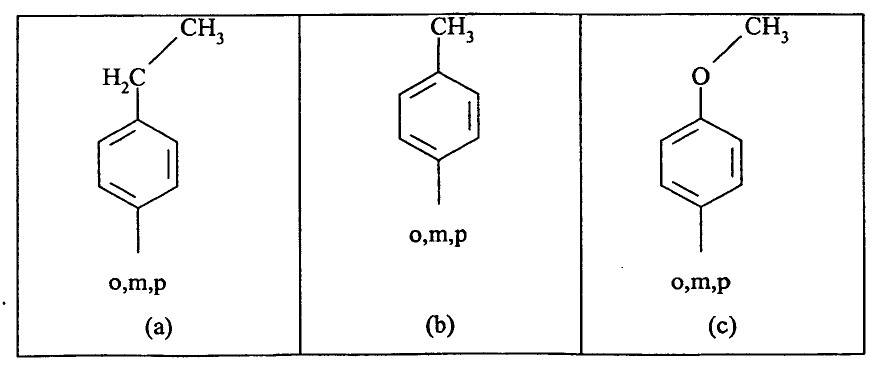

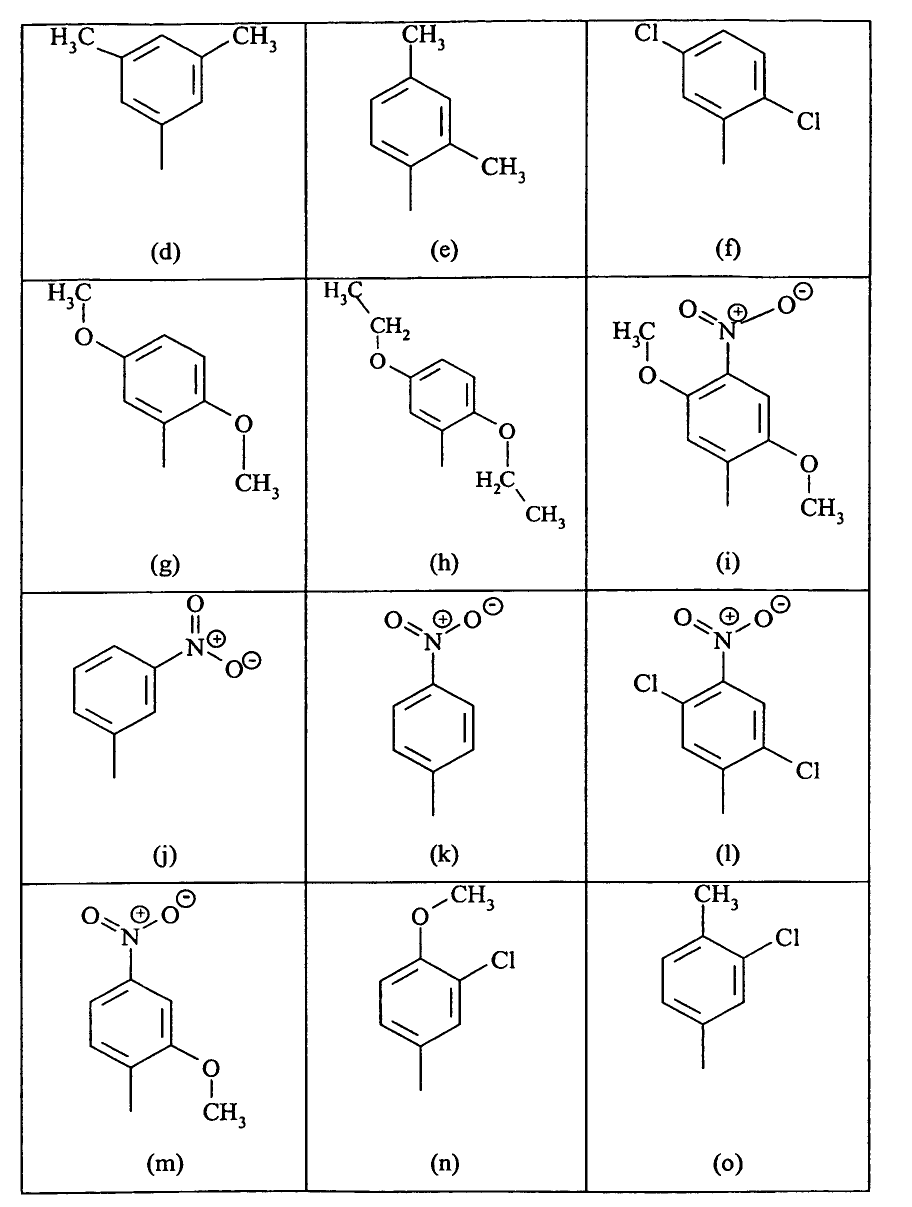

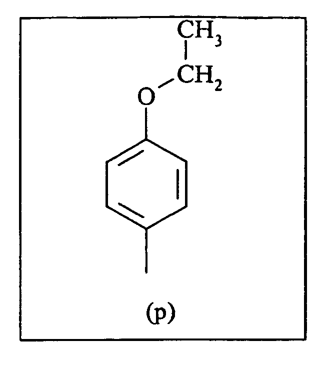

4. Composés de triphéndioxazine selon la revendication 2, dans lesquels le radical benzanilide substitué est choisi dans le groupe qui comprend les radicaux qui correspondent aux formules (r) et (s)

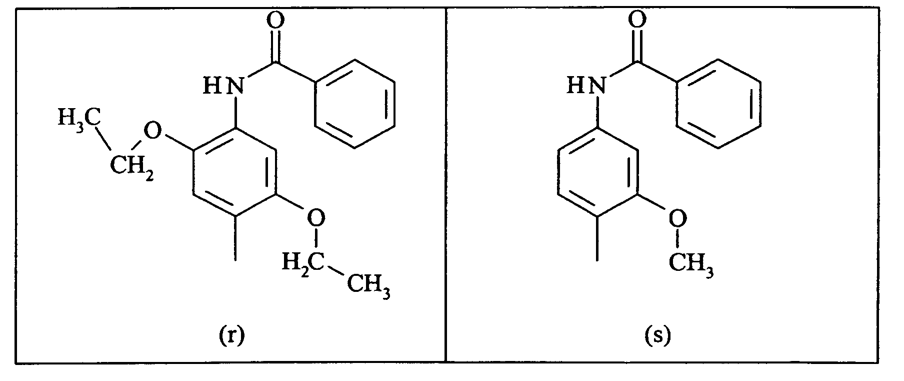

5. Composé de triphéndioxazine selon la revendication 1 de formule III 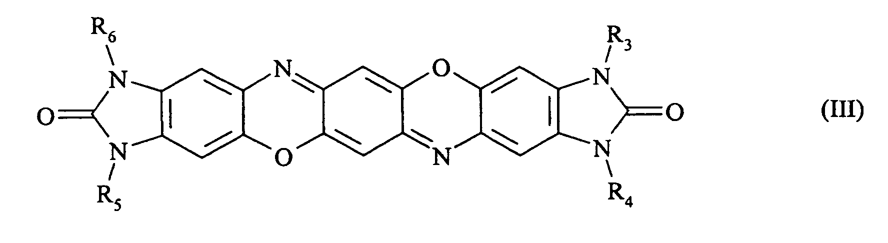 dans laquelle R₄ et R₆ signifient hydrogène, R₃ signifie un radical méthyle et R₅ signifie un radical éthyle.

6. Composé de triphéndioxazine selon la formule III selon la revendication 5, dans laquelle R₄ et R₆ signifient hydrogène, R₃ et R₅ signifient à chaque fois un radical de formule

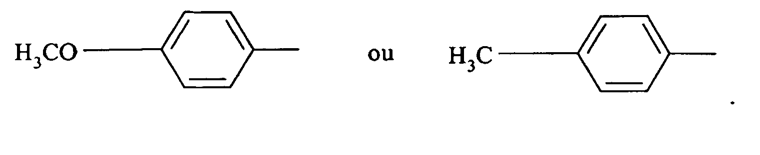

7. Composés de triphéndioxazine selon la revendication 1, dans lesquels, pour les éléments résiduels des formules (i) à (xi) les parties de formule 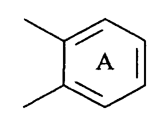 correspondent aux formules (α) à (ρ) 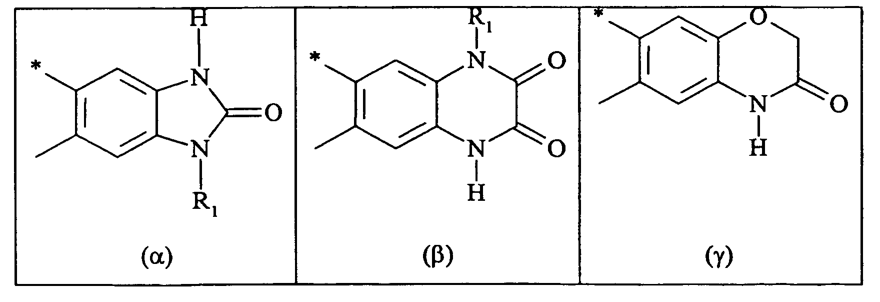 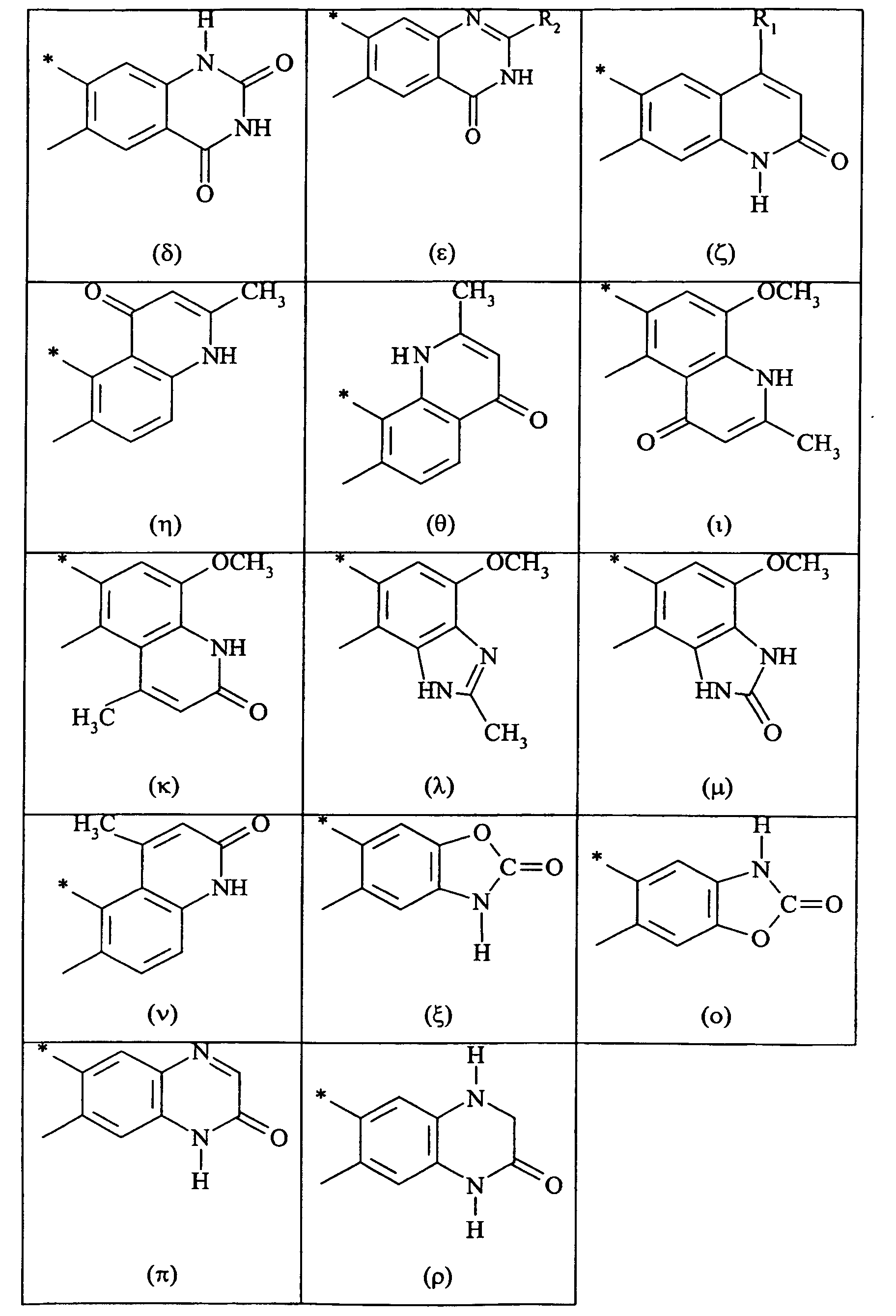 où la liaison désignée par * est celle avec l'atome d'azote et
R₁ signifie hydrogène, alkyle en C₁ à C₄ ou phényle et
R₂ signifie hydrogène, alkyle en C₁ à C₄ ou phényle.

8. Procédé pour la préparation des composés de triphéndioxazine de formule (I) selon la revendication 1, **caractérisé en ce qu'**on condense 1 mole de 2,3,5,6-tétrachloro-1,4-benzoquinone avec 2 moles d'un composé de formule générale (IIa) et (IIb) 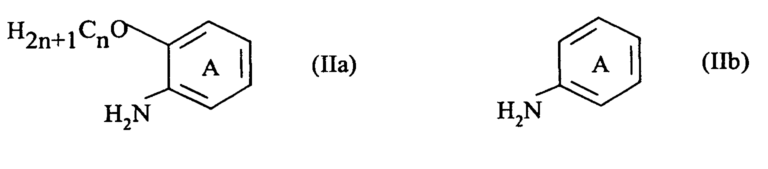 dans laquelle n signifie 1, 2 ou 3,
en présence d'un acide carboxylique organique, en particulier l'acide para-toluène-sulfonique.

9. Utilisation des composés de formule (I) selon la revendication 1 comme pigments.

10. Utilisation selon la revendication 9 pour la teinture de masses en matériau synthétique ou en papier, comme colorant dans les toners et les agents de développement électrophotographiques, dans les encres pour imprimantes à jet d'encre, dans l'industrie des laques, pour l'impression sur textile ou comme encre d'impression dans les activités graphiques.
